# EUROPÄISCHE PATENTANMELDUNG

(11) **EP 3 282 155 A1**
(43) Veröffentlichungstag der Anmeldung: **14.02.2018**
(21) Anmeldenummer: 16183664.8
(22) Anmeldetag: 11.08.2016
(51) Int. Cl.: F16K 5/18

(54) **VENTIL MIT SCHWENKBAREM VENTILGLIED**

(71) Anmelder: Putzmeister Engineering GmbH, 72631 Aichtal (DE)
(72) Erfinder: Weber, Felix, 70176 Stuttgart (DE)
(74) Vertreter: Glawe, Delfs, Moll

(57) **Zusammenfassung**

Die Erfindung betrifft ein Ventil mit einer Durchtrittsöffnung (27) und mit einem der Durchtrittsöffnung (27) zugeordneten Ventilglied (32). Das Ventilglied (32) ist bezogen auf eine Schwenkachse (36) schwenkbar gelagert, wobei das Ventilglied (32) eine konzentrisch zu der Schwenkachse (36) gewölbte Dichtfläche (38) aufweist. Das Ventilglied (32) gibt in einem ersten Zustand die erste Durchtrittsöffnung (27) frei und verschließt in einem zweiten Zustand die Durchtrittsöffnung (27). Die Dichtfläche ist bezogen auf die Schwenkachse (36) radial bewegbar. Das erfindungsgemäße Ventil hat eine hohe Robustheit und ist deswegen insbesondere zur Verwendung bei Materialien mit körnigen Bestandteilen geeignet.

## Beschreibung

Die Erfindung betrifft ein Ventil mit einer Durchtrittsöffnung und mit einem Ventilglied, das mit der Durchtrittsöffnung zusammenwirkt.

Ventile dieser Art werden beispielsweise benötigt für Anwendungen, bei denen ein körniges oder körnige Bestandteile enthaltendes Gut zu einem Behälter zugeführt wird und bei denen das Material in dem Behälter bei einem von Atmosphärendruck abweichenden Druck behandelt wird. Bei solchen Anwendungen ist das Ventil erhöhten Anforderungen ausgesetzt, weil es einerseits so robust sein soll, dass es durch den Fluss des Guts und die darin enthaltenen Körner nicht beeinträchtigt wird, während andererseits das Ventil im geschlossenen Zustand eine hinreichende Dichtheit gewährleisten soll.

Der Erfindung liegt die Aufgabe zugrunde, ein Ventil vorzustellen, das für solche Anwendungen geeignet ist. Ausgehend vom genannten Stand der Technik wird die Aufgabe gelöst mit den Merkmalen des Anspruchs 1. Vorteilhafte Ausführungsformen sind in den Unteransprüchen angegeben.

Bei dem erfindungsgemäßen Ventil ist das der Durchtrittsöffnung zugeordnete Ventilglied bezogen auf eine Schwenkachse schwenkbar gelagert und hat eine konzentrisch zu der Schwenkachse gewölbte Dichtfläche. In einem ersten Zustand gibt das Ventilglied die Durchtrittsöffnung frei. In einem zweiten Zustand verschließt das Ventilglied die Durchtrittsöffnung. Die Dichtfläche ist bezogen auf die Schwenkachse radial bewegbar.

Indem das Ventilglied durch eine Bewegung um die Schwenkachse zur Seite geschwenkt wird, kann die Durchtrittsöffnung mit einer einfachen Bewegung freigegeben werden, sodass der Materialstrom an dem Ventilglied vorbei geleitet wird. Da die Dichtfläche bezogen auf die Schwenkachse in radialer Richtung bewegbar ist, kann der Anlagedruck zwischen der Dichtfläche und der Durchtrittsöffnung an den jeweiligen Betriebszustand angepasst werden. Insbesondere kann der Anlagedruck erhöht werden, wenn die Durchtrittsöffnung durch das Ventilglied abgedichtet werden soll. Außerdem ist durch die radiale Bewegung ein Verschleißausgleich möglich. Das erfindungsgemäße Ventil ist einerseits so robust, dass es auch grobkörnigen Bestandteilen in dem geförderten Material standhält, während es andererseits im geschlossenen Zustand eine zuverlässige Abdichtung der Durchtrittsöffnung bieten kann.

Die Durchtrittsöffnung kann eine Dichtfläche aufweisen, die dazu ausgelegt ist, mit der Dichtfläche des Ventilglieds zusammenzuwirken. Bei der Dichtfläche kann es sich beispielsweise um eine Innenfläche eines Gehäuses des Ventils handeln, die sich rund um die Durchtrittsöffnung herum erstreckt. Die Dichtfläche der Durchtrittsöffnung kann eine zu der Schwenkachse des Ventilglieds konzentrische Wölbung aufweisen. Durch die konzentrische Wölbung der zusammenwirkenden Dichtflächen kann zwischen dem geöffneten Zustand und dem geschlossenen Zustand des Ventils umgeschaltet werden, indem das Ventilglied um die Schwenkachse, die der Achse der Wölbung entspricht, verdreht wird.

In einer Ausführungsform entspricht die konzentrische Wölbung einem Segment eines Zylindermantels, wobei die Zylinderachse gleich der Schwenkachse ist. Bei dieser Ausführungsform ist der radiale Abstand zwischen der Dichtfläche des Ventilglieds und der Schwenkachse über die Länge der Schwenkachse konstant. Umfasst sind auch Ausführungsformen, bei denen der radiale Abstand längs der Schwenkachse variiert. In jedem Fall kann die Wölbung in Umfangsrichtung einem Kreissegment entsprechen.

Wird im geöffneten Zustand des Ventils ein Material mit körnigen Bestandteilen durch die Durchtrittsöffnung hindurch gefördert, so kann der anschließende Schaltvorgang des Ventils durch im Bereich der Durchtrittsöffnung verbleibende körnige Bestandteile behindert werden. Der Abstand zwischen der Dichtfläche des Ventilglieds und der Dichtfläche mit der Durchtrittsöffnung während des Schaltvorgangs kann so eingestellt sein, dass das Material mit der Schwenkbewegung des Ventilglieds zur Seite geschoben wird. Dadurch kann das Ventilglied in eine die Durchtrittsöffnung verschließende Position geschwenkt werden, ohne dass sich störendes Material zwischen dem Ventilglied und der Durchtrittsöffnung befindet. Die Dichtfläche des Ventilglieds kann während des Schaltvorgangs einen geringfügigen Abstand zu der Dichtfläche der Durchtrittsöffnung haben. Möglich ist auch, dass die Dichtfläche des Ventilglieds die Dichtfläche der Durchtrittsöffnung während des Schaltvorgangs gleitend berührt.

Auch wenn die Dichtflächen sich während des Schaltvorgangs gleitend berühren, ist der Anlagedruck in vielen Fällen nicht ausreichend, um eine hinreichende Dichtheit des Ventils im geschlossenen Zustand zu gewährleisten. Es kann deswegen im geschlossenen Zustand des Ventils eine Kraft in radialer Richtung ausgeübt werden, durch die der Anlagedruck zwischen der Dichtfläche des Ventilglieds und der Dichtfläche der Durchtrittsöffnung erhöht wird. Die Kraft in radialer Richtung kann beispielsweise durch eine Druckdifferenz oder durch einen aktiven Antrieb aufgebracht werden.

Um die Dichtfläche in radialer Richtung bewegen zu können, kann das Ventilglied ein Dichtteil und ein Schwenkteil umfassen, wobei das Schwenkteil in der Schwenkachse drehbar gelagert ist. An dem Schwenkteil kann ein motorischer Antrieb angreifen, um die Schaltvorgänge zwischen den verschiedenen Zuständen des Ventils zu bewirken.

Das Ventilglied kann eine Verbindungsstruktur umfassen, die eine Verbindung zwischen dem Dichtteil und dem Schwenkteil herstellt. Die Verbindungsstruktur kann so gestaltet sein, dass sie starr ist gegenüber Drehmomenten, die relativ zu der Schwenkachse wirken. Starr in diesem Sinne bedeutet, dass bei einer Drehung des Schwenkteils relativ zu der Schwenkachse auch das Dichtteil die entsprechende Schwenkbewegung vollzieht.

Bezogen auf die Radialrichtung kann die Verbindungsstruktur eine Bewegung des Dichtteils relativ zu dem Schwenkteil zulassen. Damit kann der radiale Abstand zwischen der Dichtfläche und der Schwenkachse so angepasst werden, dass sich im geschlossenen Zustand des Ventils die gewünschte Dichtwirkung zwischen dem Ventilglied und der Durchtrittsöffnung einstellt.

Die Verbindungsstruktur kann ein zwischen dem Dichtteil und dem Schwenkteil angeordnetes elastisches Element umfassen. Im Anfangszustand des Ventils kann das elastische Element komprimiert sein. Kommt es im Laufe des Betriebs zu einem Verschleiß zwischen den Dichtflächen, so dehnt sich das elastische Element aus. Der Verschleiß wird also automatisch ausgeglichen.

Zusätzlich oder alternativ dazu kann das erfindungsgemäße Ventilglied einen aktiven Antrieb umfassen, um das Dichtteil in Radialrichtung relativ zu dem Schwenkteil zu bewegen. Der Antrieb kann genutzt werden, um die Position des Dichtteils zu dem Schwenkteil im Betrieb anzupassen. Beispielsweise kann die Dichtfläche während des Schaltvorgangs radial nach innen gezogen werden und im geschlossenen Zustand radial nach außen gedrückt werden. Möglich ist auch, den Antrieb zu nutzen, um die Federspannung des elastischen Elements zu justieren. Der Antrieb kann beispielsweise ein hydraulischer Antrieb oder ein mechanischer Antrieb sein.

Die radiale Bewegung der Dichtfläche kann alternativ auch dadurch erfolgen, dass das Ventilglied insgesamt relativ zu einem Gehäuse bewegt wird, in dem das Ventilglied gelagert ist. Beispielsweise kann zwischen einer Welle des Ventilglieds und dem Gehäuse ein elastisches Element vorgesehen sein, das bei einer radialen Bewegung der Dichtfläche des Ventilglieds komprimiert oder gedehnt wird. Das elastische Element kann sich beispielsweise rund um eine Welle des Ventilglieds und/oder rund um ein Schwenklager des Ventilglieds herum erstrecken.

Das Ventilglied kann in einem Gehäuse des erfindungsgemäßen Ventils angeordnet sein. Das Ventilglied kann benachbart zu einer Stirnwand des Gehäuses angeordnet sein, wobei die Stirnachse rechtwinklig zu der Schwenkachse ausgerichtet ist. Die Schwenkbewegung des Ventilglieds verläuft dann parallel zu der Stirnwand. Das Ventilglied kann von der Stirnwand beabstandet sein, so dass auch die grobkörnigen Bestandteile des Dickstoffs zwischen dem Ventilglied und der Stirnwand Platz haben. Damit wird die Betätigung des Ventilglieds erleichtert.

In einer alternativen Ausführungsform ist der Abstand zwischen dem Ventilglied und der Stirnwand kleiner als die grobkörnigen Bestandteile des Dickstoffs. Das Ventilglied kann einen Kratzer umfassen, der beim Betätigen des Ventilglieds den Dickstoff entlang der Stirnwand zur Seite schiebt, sodass keine Körner zwischen dem Ventilglied und der Stirnwand eingeklemmt werden können. Der Kratzer kann auf der Stirnwand aufliegen oder einen geringfügigen Abstand zu der Stirnwand haben.

Das Gehäuse kann eine zweite Stirnwand aufweisen, sodass das Ventilglied zwischen der ersten und der zweiten Stirnwand angeordnet ist. Das Zusammenwirken zwischen dem Ventilglied und der zweiten Stirnwand kann entsprechend gestaltet sein.

Eine Welle des Ventilglieds kann in dem Gehäuse des Ventils gelagert sein. Dabei können zwei Lager so angeordnet sein, dass sie das Ventilglied zwischen sich einschließen. Zwischen den Lagern kann sich eine Welle erstrecken, die ein Bestandteil des Schwenkteils des Ventilglieds ist.

Das erfindungsgemäße Ventil kann so gestaltet sein, dass eine gerade Verbindungsstrecke zwischen einer Eingangsöffnung und einer Ausgangsöffnung des Ventils die Schwenkachse schneidet. Erstreckt sich eine Welle des Ventilglieds entlang der Schwenkachse, so muss der Materialstrom entlang einem gekrümmten Weg an der Welle vorbeigeführt werden.

Um den Strömungswiderstand gering zu halten, kann das Ventilglied eine Leitfläche umfassen, mit der der Materialstrom an der Welle vorbei geleitet wird. Die Leitfläche kann an die Dichtfläche anschließen (bezogen auf die Bewegungsrichtung des Ventilglieds) und einen im Wesentlichen geraden Weg an dem Ventilglied und der Schwenkachse vorbei definieren. Die Leitfläche kann eine ebene Leitfläche sein, die insbesondere parallel zu der Schwenkachse ausgerichtet sein kann. An ihrem zu der Ausgangsöffnung benachbarten Ende kann die Leitfläche mit einer Ausnehmung versehen sein, um den Übergang des Materialstroms in die Ausgangsöffnung zu erleichtern. Das Ventilglied kann zwei solcher Leitflächen umfassen, wobei die Dichtfläche zwischen den Leitflächen eingeschlossen ist. Je nach Schaltzustand des Ventils kann der Materialstrom entweder an der einen und/oder der anderen Leitfläche entlang geleitet werden.

Eine solche Leitfläche kann insbesondere dann von Vorteil sein, wenn das Ventilglied so gestaltet ist, dass die Schwenkachse im Körper des Ventilglieds eingeschlossen ist. Das elastische Element des Ventilglieds kann sich um die Welle des Ventilglieds herum erstrecken oder zwischen der Schwenkachse und der Dichtfläche angeordnet sein.

Um den Strömungswiderstand gering zu halten, kann die Welle des Ventilglieds zwei Wellenstummel umfassen, die in Lagern des Ventilgehäuses geführt sind. Die Verbindung zwischen den beiden Wellenstummeln kann über eine Verbindungsstruktur hergestellt werden, deren Abstand zu der Dichtfläche geringer ist als der Abstand zwischen der Schwenkachse und der Dichtfläche. Indem die Verbindungsstruktur sich nicht entlang der Schwenkachse erstreckt, sondern näher an der Dichtfläche angeordnet ist, bleibt ein Freiraum, der für den Materialstrom auf seinem Weg zu der Ausgangsöffnung zur Verfügung steht. Insbesondere kann die Verbindungsstruktur so gestaltet sein, dass eine Gerade, die sich vom Mittelpunkt der nicht verschlossenen Durchtrittsöffnung zum Mittelpunkt der Austrittsöffnung erstreckt, das Ventilglied nicht schneidet.

Für die Verbindung zwischen der Welle und dem Dichtteil kann die Verbindungsstruktur einen Schenkel umfassen, der sich zu dem Dichtteil erstreckt. Insbesondere kann der Schenkel in radialer Richtung ausgerichtet sein. Bezogen auf das Dichtteil kann der Schenkel mittig angeordnet sein. Wenn der Schenkel einen Abstand zu den Stirnwänden des Ventilgehäuses hat, so kann er gut von dem geförderten Material umströmt werden.

Möglich ist auch, dass die Verbindungsstruktur zwei Schenkel umfasst, die sich in Richtung Dichtteil erstrecken. Die Schenkel können parallel zueinander sein und in radialer Richtung ausgerichtet sein. Die Schenkel können so angeordnet sein, dass ein zwischen der Schwenkachse und dem Zentrum des Dichtteils angeordneter Bereich freigehalten wird, sodass er von dem Dickstoff durchströmt werden kann. Bezogen auf den Abstand zwischen der Schwenkachse und der Dichtfläche des Ventilglieds kann der freigehaltene Bereich sich über wenigstens 10 %, vorzugsweise wenigstens 30 %, weiter vorzugsweise wenigstens 50 % erstrecken.

Die beiden Schenkel können einen Abstand zu den Stirnwänden des Gehäuses aufweisen. Alternativ können die Schenkel als Kratzer ausgebildet sein, sodass der Dickstoff bei einer Betätigung des Ventilglieds entlang der Stirnfläche beiseite geschoben wird.

Das erfindungsgemäße Ventil kann so verwendet werden, dass eine über dem Ventilglied anliegende Druckdifferenz die Dichtwirkung im geschlossenen Zustand des Ventils verstärkt. Ist der auf das Ventilglied wirkende Druck höher als ein jenseits der Durchtrittsöffnung anliegender Druck, so kann das Ventilglied durch die Druckdifferenz in radialer Richtung gegen die Dichtfläche der Durchtrittsöffnung gedrückt werden. Die Richtungsangabe radial bezieht sich auf die Schwenkachse des Ventilglieds. Das Ventilglied kann zu diesem Zweck eine Außenfläche umfassen, durch die ein auf das Ventilglied wirkender Druck in eine in radialer Richtung wirkende Kraft umgesetzt wird. Außenfläche bezeichnet einen Bereich des Ventilglieds, der mit dem Materialstrom in Berührung kommt.

Insbesondere kann das Ventilglied eine Außenfläche aufweisen, die der Dichtfläche gegenüberliegt. Die Außenfläche kann so ausgerichtet sein, dass sie die Radialrichtung senkrecht schneidet. Ein auf die Außenfläche wirkender Druck ist dann so ausgerichtet, dass er direkt die Dichtwirkung verstärkt.

Möglich ist auch, dass das Ventilglied eine bezogen auf die Radialrichtung geneigte Außenfläche aufweist, sodass lediglich ein Anteil der Druckkraft in Richtung der Dichtfläche wirkt. Das Ventilglied kann auch zwei gegensinnig orientierte geneigte Außenflächen aufweisen. Gegensinnig bedeutet, dass die Außenflächen so ausgerichtet sind, dass die in radialer Richtung wirkenden Komponenten der Druckkraft sich addieren.

Das erfindungsgemäße Ventil kann eine Mehrzahl von Durchtrittsöffnungen umfassen. Beispielsweise kann eine erste Durchtrittsöffnung für den Eintritt des geförderten Materials vorgesehen sein und eine zweite Durchtrittsöffnung für den Austritt des geförderten Materials vorgesehen sein. Das Ventilglied kann zwischen der Eintrittsöffnung und der Austrittsöffnung angeordnet sein. Insbesondere kann das Ventilglied dazu ausgelegt sein, mit der Eintrittsöffnung zusammenzuwirken.

Möglich ist auch, dass das erfindungsgemäße Ventil eine Mehrzahl von Eintrittsöffnungen und/oder eine Mehrzahl von Austrittsöffnungen umfasst. Das Ventilglied kann mehrere Zustände aufweisen, in denen es unterschiedliche Durchtrittsöffnungen des Ventils verschließt. Vorgesehen sein kann ferner ein Zustand des Ventilglieds, in dem keine der Durchtrittsöffnungen verschlossen ist.

Als selbständiger Erfindungsgedanke wird offenbart ein Ventil mit einer Durchtrittsöffnung und mit einem der Durchtrittsöffnung zugeordneten Ventilglied, wobei das Ventilglied eine passend zu der Durchtrittsöffnung geformte Dichtfläche aufweist, und wobei das Ventilglied in einem ersten Zustand die Durchtrittsöffnung freigibt, wobei das Ventilglied in einem zweiten Zustand die Durchtrittsöffnung verschließt, und wobei die Dichtfläche entlang einer Achse der Durchtrittsöffnung bewegbar ist. Beim Wechsel zwischen dem ersten Zustand und dem zweiten Zustand vollführt das Ventilglied eine lineare Bewegung, die vorzugsweise senkrecht zur Achse der Durchtrittsöffnung ausgerichtet ist. Die Durchtrittsöffnung kann in einer ebenen Fläche des Ventilgehäuses ausgebildet sein. Die Dichtfläche des Ventilglieds kann ebenfalls eben sein. Dieses Ventil kann mit weiteren Merkmalen des beanspruchten Ventils fortgebildet werden. Dieses Ventil ist eine alternative Ausführungsform mit vergleichbaren Vorteilen.

Die Erfindung betrifft außerdem einen Prozessbehälter mit einem erfindungsgemäßen Ventil. Das Ventil ist in einer Leitung angeordnet, durch die ein Material mit körnigen Bestandteilen in den Prozessbehälter gefördert werden kann. Im geöffneten Zustand des Ventils ist die Leitung durchlässig für das Material. Im geschlossenen Zustand dichtet das Ventil die Leitung ab.

An den Prozessbehälter kann eine Pumpe angeschlossen sein, mit der im Innenraum des Prozessbehälters ein von dem Umgebungsdruck abweichender Druck angelegt werden kann. Insbesondere kann die Pumpe ausgelegt sein, um in dem Prozessbehälter einen Überdruck zu erzeugen. Es kann eine Heizeinrichtung vorgesehen sein, sodass das Material in dem Prozessbehälter einer erhöhten Temperatur ausgesetzt werden kann. Der Prozessbehälter kann einen Auslass umfassen, durch den das Material wieder aus dem Prozessbehälter entfernt werden kann.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein Verwendungsbeispiel eines erfindungsgemäßen Ventils;
- Fig. 2:: eine Schnittdarstellung eines erfindungsgemäßen Ventils in zwei Zuständen A, B;
- Fig. 3:: eine schematische Darstellung eines erfindungsgemäßen Ventilglieds;
- Fig. 4:: eine Darstellung der auf das Dichtteil des Ventilglieds wirkenden Drücke;
- Fig. 5:: ein Ventilglied eines erfindungsgemäßen Ventils in teilweise geschnittener Darstellung;
- Fig. 6:: ein Ventilglied in einer alternativen Ausführungsform der Erfindung;

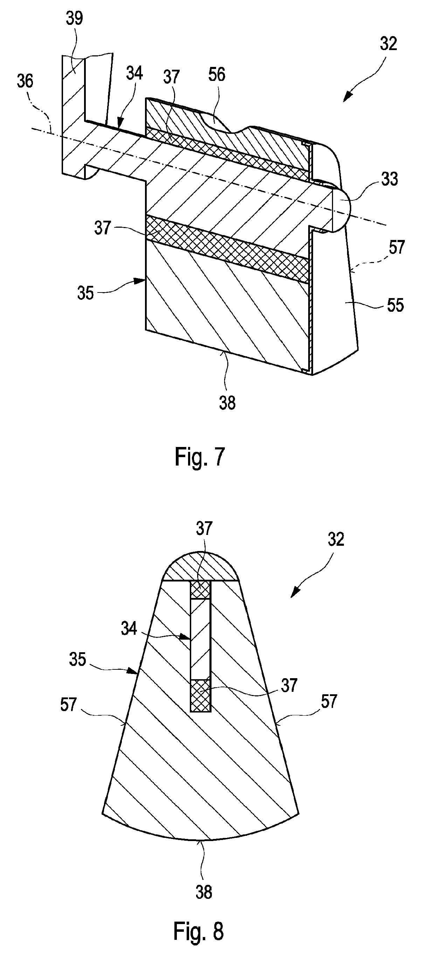

- Fig. 7:: eine Schnittdarstellung eines Ventilglieds in einer weiteren alternativen Ausführungsform; und
- Fig. 8: eine andere Schnittdarstellung der Ausführungsform gemäß Fig. 7.

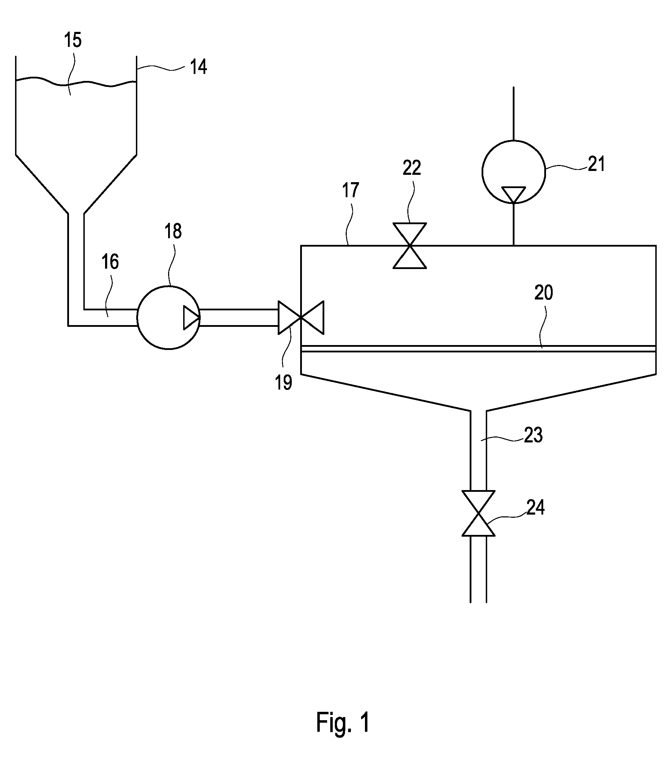

In dem Ausführungsbeispiel gemäß Fig. 1 ist ein Vorratsbehälter 14 mit einem körnige Bestandteile enthaltenden Material 15 gefüllt. Der Vorratsbehälter 14 ist über eine Förderleitung 16 an einen Prozessbehälter 17 angeschlossen. Mit einer Pumpe 18 kann das Material durch ein erfindungsgemäßes Ventil 19 hindurch in den Innenraum des Prozessbehälters 17 gefördert werden.

Das in den Prozessbehälter 17 geförderte Material wird mit einem nicht dargestellten Schieber auf einem in dem Prozessbehälter 17 angeordneten Rost 20 verteilt, sodass sich auf dem Rost 20 ein Materialbett von im Wesentlichen gleichmäßiger Dicke ergibt. Das erfindungsgemäße Ventil 19 wird geschlossen, sodass der Innenraum des Prozessbehälters 17 hermetisch von der Umgebung getrennt ist. Mit einem Kompressor 21 wird ein Überdruck in dem Prozessbehälter 17 angelegt. Unter Überdruck werden weitere Verfahrensschritte an dem Material 15 durchgeführt, die hier nicht näher erläutert sind. Nach dem Abschluss der Behandlung wird der Überdruck durch ein Gasventil 22 abgelassen. Der Rost 20 wird geöffnet, sodass das Material nach unten fallen kann und durch eine Anschlussleitung 23 und ein geöffnetes Auslassventil 24 aus dem Prozessbehälter 17 entfernt werden kann. Nach Schließen des Auslassventils 24 und erneutem Öffnen des erfindungsgemäßen Ventils 19 beginnt der Ablauf von vorne.

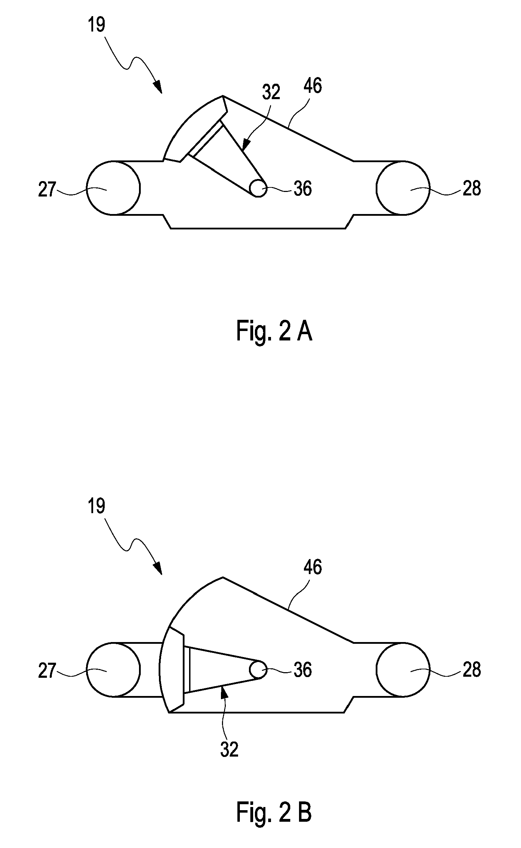

Das erfindungsgemäße Ventil 19 umfasst gemäß Fig. 2 ein in einem Ventilgehäuse 46 angeordnetes Ventilglied 32, das um eine Achse 36 schwenkbar gelagert ist. Das Ventilgehäuse 46 umfasst eine Einlassöffnung 27 (=Durchtrittsöffnung) und eine Auslassöffnung 28. Im geöffneten Zustand des Ventils 19 (Fig. 2A) ist das Ventilglied 32 nach oben geschwenkt, sodass der Durchgang von der Einlassöffnung 27 zu der Auslassöffnung 28 frei ist. Im geschlossenen Zustand des Ventils (Fig. 2B) ist das Ventilglied 32 nach unten geschwenkt, sodass die Einlassöffnung 27 verschlossen ist. Das Ventilglied 32 des Ventils 19 wird über einen Antrieb aktiv zwischen den verschiedenen Schaltzuständen umgeschaltet.

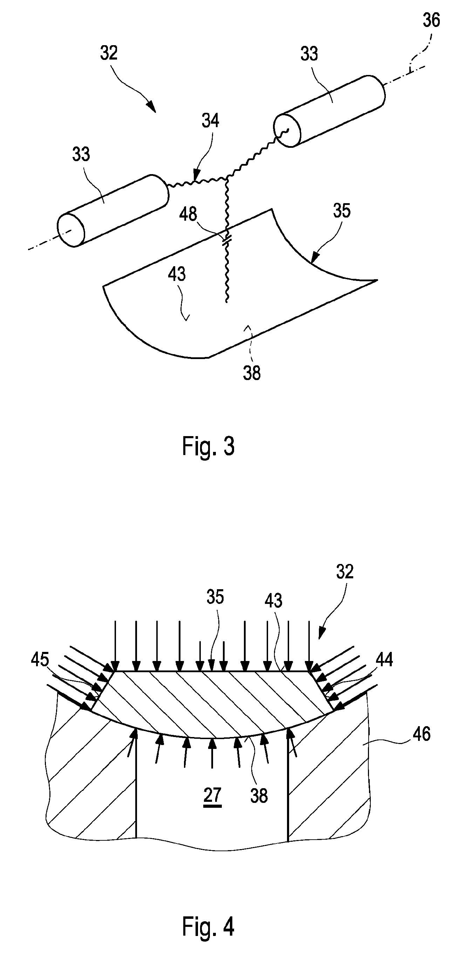

Das Ventilglied 32 des Ventils 26 umfasst gemäß Fig. 3 ein Schwenkteil 34 und ein Dichtteil 35. Das Schwenkteil 34 umfasst zwei Abschnitte einer Welle 33, über die das Schwenkteil bezogen auf eine Schwenkachse 36 drehbar gelagert ist. Zwischen der Welle 33 und dem Dichtteil 35 ist eine in Fig. 3 nur schematisch dargestellte Verbindungsstruktur 48 ausgebildet. Über die Verbindungsstruktur 48 kann der radiale Abstand zwischen dem Dichtteil 35 und der Welle 33 verändert werden. Hingegen ist die Verbindungsstruktur 48 gegenüber Drehmomenten starr. Wird also die Welle 33 um einen bestimmten Winkel gedreht, so vollführt das Dichtteil 35 eine Schwenkbewegung um denselben Winkel.

Die in Fig. 3 nach unten weisende Fläche des Dichtteils 35 bildet eine Dichtfläche 38 in Form eines konzentrisch zu der Schwenkachse 36 ausgerichteten Zylindersegments. Das Gehäuse 46 des Ventils 19 hat eine dazu passende Gegenfläche, die ebenfalls die Form eines Zylindersegments hat. In der Gegenfläche ist die Durchtrittsöffnung 27 des Ventils 19 ausgebildet. Die Dichtfläche 38 des Ventilglieds 32 wirkt mit der Gegenfläche des Ventilgehäuses 46 zusammen und kann je nach Schaltzustand die Durchtrittsöffnung 27 entweder abdichten oder freigeben.

In Fig. 4 ist ein Zustand des Ventils dargestellt, in dem im Innenraum des Ventils ein höherer Druck anliegt als vor der Durchtrittsöffnung 27, die mit dem Dichtteil 35 verschlossen ist. Das Ventilglied 32 hat eine der Dichtfläche 38 gegenüberliegende Außenfläche 43, auf die der in dem Ventilgehäuse 46 anliegende Druck in radialer Richtung wirkt. Die Druckdifferenz gegenüber der Außenseite trägt dazu bei, die Dichtwirkung zwischen dem Ventilglied 32 und dem Ventilgehäuse 46 zu verstärken. Das Ventilglied 32 hat außerdem zwei symmetrisch zueinander angeordnete Außenflächen 44, 45. Ein auf die Außenflächen 44, 45 wirkender Druck des Materials hat ebenfalls eine Komponente in radialer Richtung, sodass auch die Außenflächen 44, 45 zur Verstärkung der Dichtwirkung beitragen.

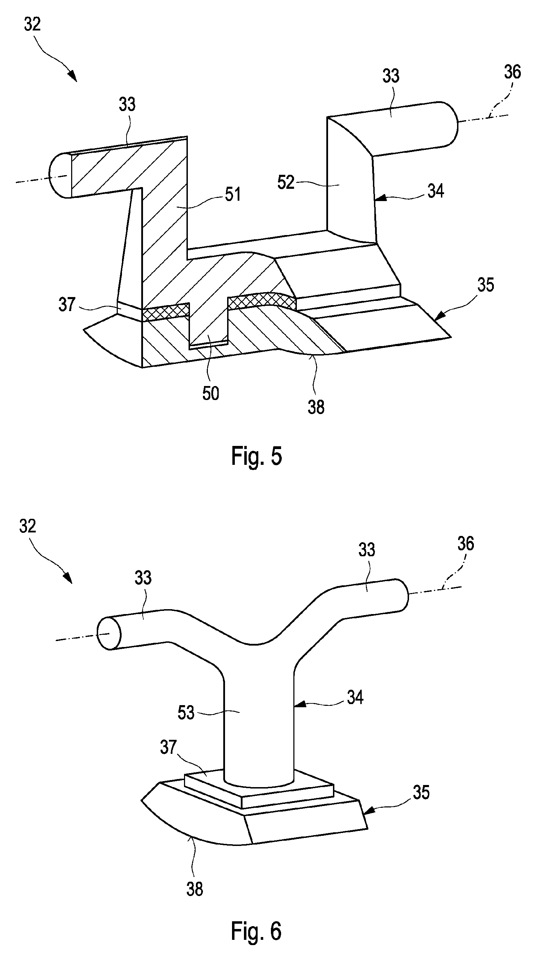

Bei dem in Fig. 5 gezeigten Ventilglied 32 umfasst das Schwenkteil 34 einen Zapfen 50, der in eine passende Ausnehmung des Dichtteils 35 eingreift. Mit dem Zapfen 50 wird eine Schiebeführung gebildet, entlang derer sich das Dichtteil 35 in radialer Richtung relativ zu der Welle 33 bewegen kann. Gegenüber Kräften in anderen Richtungen ist die Schiebeführung starr.

Zwischen dem Schwenkteil 34 und dem Dichtteil 35 ist eine Platte 37 aus einem elastischen Material angeordnet. Die Platte 37 ist Bestandteil der Verbindungsstruktur zwischen dem Schwenkteil 34 und dem Dichtteil 35. Durch Druck in radialer Richtung kann die Platte 37 elastisch komprimiert werden, wodurch das Dichtteil 35 entlang der Schiebeführung an das Schwenkteil 34 angenähert wird.

Das erfindungsgemäße Ventil 19 ist im Auslieferungszustand so eingerichtet, dass die Platte 37 elastisch komprimiert ist und das Dichtteil 35 folglich unter einem elastischen Druck an dem Ventilgehäuse anliegt, den die Platte 37 in radialer Richtung ausübt. Kommt es im Betrieb des Ventils zu einem Verschleiß des Ventilglieds 32 oder des Ventilgehäuses, so kann dieser durch Ausdehnung der elastischen Platte 37 selbsttätig ausgeglichen werden.

Das in Fig. 5 gezeigte Ventilglied 32 ist außerdem so gestaltet, dass zwischen zwei Wellenstummeln 33 ein Freiraum eingeschlossen ist, sodass der Materialstrom sich auf direktem Weg von der Einlassöffnung 27 in Richtung Auslassöffnung 28 bewegen kann. Das Schwenkteil 34 umfasst zwei Schenkel 51, 52, die sich in radialer Richtung erstrecken und die den Freiraum zwischen sich einschließen. In radialer Richtung erstreckt der Freiraum sich über mehr als 50 % des Abstands zwischen der Schwenkachse 36 und der Dichtfläche 38.

Bei der Ausführungsform gemäß Fig. 6 ist ebenfalls zwischen zwei Wellenstummeln 33 ein Freiraum eingeschlossen, um die Bewegung des Förderstroms in Richtung der Auslassöffnung zu erleichtern. Ein zentraler Schenkel 53 erstreckt sich in radialer Richtung und ist mittig mit dem Dichtteil 35 verbunden. Um den Schenkel 53 herum ist ausreichend Raum für die Bewegung des Materialstroms. Im Übrigen ist die Verbindungsstruktur analog zu Fig. 11 gestaltet mit einer elastischen Platte 37 und einer in Fig. 12 nicht sichtbaren Schiebeführung.

In Fig. 13 ist eine alternative Ausführungsform eines erfindungsgemäßen Ventilglieds 32 dargestellt. Das Dichtteil 35 erstreckt sich um das Schwenkteil 34 herum, so dass ein Abschnitt des Schwenkteils 34 im Inneren des Dichtteils aufgenommen ist. Gemäß der Schnittdarstellung in Fig. 14 hat das Schwenkteil 34 im Inneren des Dichtteils 35 einen rechteckigen Querschnitt. Das Dichtteil 35 hat einen zu dem rechteckigen Querschnitt passenden Schlitz, in dem oberhalb und unterhalb des Schwenkteils 34 elastische Elemente 37 angeordnet sind, so dass das Dichtteil 35 sich in Radialrichtung relativ zu dem Schwenkteil 34 bewegen kann, während eine relative Drehbewegung zwischen dem Dichtteil 35 und dem Schwenkteil 34 ausgeschlossen ist. Das Schwenkteil 34 umfasst einen Hebel 39, an dem ein Antrieb angreifen kann, um das Ventilglied 32 zwischen den verschiedenen Schaltzuständen umzuschalten.

Das Ventilglied 32 ist so bemessen, dass es mit seinen beiden in Axialrichtung weisenden Stirnflächen direkt an dem Gehäuse 46 des Ventils 19 anliegt. Die Stirnflächen des Ventilglieds sind als Kratzer 55 ausgebildet. Die Kratzer 55 schieben bei einem Schaltvorgang des Ventilglieds 32 den Dickstoff entlang der Stirnfläche des Gehäuses zur Seite.

Die Seitenflächen 57 des Ventilglieds sind als Leitflächen gestaltet. Entlang den Leitflächen wird der Materialstrom in Richtung der Ausgangsöffnung 28 des Ventils 19 geleitet. An seiner Oberseite ist das Ventilglied 32 mit einer Ausnehmung 56 versehen, durch die die Bewegung des Materialstroms in Richtung der Ausgangsöffnung 28 erleichtert wird.

## Patentansprüche

1. Ventil mit einer Durchtrittsöffnung (27) und mit einem der Durchtrittsöffnung (27) zugeordneten Ventilglied (32), wobei das Ventilglied (32) bezogen auf eine Schwenkachse (36) schwenkbar gelagert ist, wobei das Ventilglied (32) eine konzentrisch zu der Schwenkachse (36) gewölbte Dichtfläche (38) aufweist, und wobei das Ventilglied (32) in einem ersten Zustand (30) die Durchtrittsöffnung (27) freigibt, wobei das Ventilglied (32) in einem zweiten Zustand die Durchtrittsöffnung (27) verschließt, und wobei die Dichtfläche (38) bezogen auf die Schwenkachse (36) radial bewegbar ist.

2. Ventil nach Anspruch 1, **dadurch gekennzeichnet, dass** das Ventilglied (32) ein Dichtteil (35) und ein Schwenkteil (34) umfasst, wobei das Schwenkteil (34) in der Schwenkachse (36) drehbar gelagert ist und wobei das Dichtteil (35) über eine Verbindungsstruktur (37) mit dem Schwenkteil (34) verbunden ist.

3. Ventil nach Anspruch 2, **dadurch gekennzeichnet, dass** die Verbindungsstruktur (37) starr ist gegenüber relativ zu der Schwenkachse (36) wirkenden Drehmomenten.

4. Ventil nach Anspruch 2 oder 3, **dadurch gekennzeichnet, dass** die Verbindungsstruktur (37) in Radialrichtung eine Bewegung des Dichtteils (35) relativ zu dem Schwenkteil (34) zulässt.

5. Ventil nach einem der Ansprüche 2 bis 4, **dadurch gekennzeichnet, dass** die Verbindungsstruktur (37) ein zwischen dem Dichtteil (35) und dem Schwenkteil (34) angeordnetes elastisches Element (37) umfasst.

6. Ventil nach Anspruch 2 oder 3, **dadurch gekennzeichnet, dass** zwischen einer Welle (33) des Ventilglieds (32) und einem Gehäuse (46) des Ventils ein elastisches Element ist.

7. Ventil nach einem der Ansprüche 1 bis 6, **dadurch gekennzeichnet, dass** das Ventilglied (32) zwei in der Schwenkachse (36) gelagerte Wellenstummel (33) umfasst und dass die Wellenstummel (33) einen Freiraum zwischen sich einschließen.

8. Ventil nach Anspruch 7, **dadurch gekennzeichnet, dass** der Freiraum sich über wenigstens 10 %, vorzugsweise wenigstens 30 %, weiter vorzugsweise wenigstens 50 % der Strecke zwischen der Schwenkachse (36) und der Dichtfläche (38) erstreckt.

9. Ventil nach einem der Ansprüche 1 bis 8, **dadurch gekennzeichnet, dass** das Ventilglied (32) einen Schenkel (51, 52, 53) umfasst, der sich zwischen der Schwenkachse (36) und der Dichtfläche (38) erstreckt, und dass der Schenkel (51, 52, 53) von einer Stirnfläche eines Gehäuses (46) des Ventils (26) beabstandet ist.

10. Ventil nach einem der Ansprüche 1 bis 8, **dadurch gekennzeichnet, dass** das Ventilglied (32) einen Kratzer (55) aufweist, der bei einem Schaltvorgang des Ventilglieds (32) entlang einer Stirnfläche des Ventilgehäuses (46) geführt wird.

11. Ventil nach einem der Ansprüche 1 bis 10, **dadurch gekennzeichnet, dass** das Ventilglied (32) eine Außenfläche (43, 44, 45) umfasst, durch die eine über Ventilglied (32) anliegende Druckdifferenz in eine in radialer Richtung wirkende Kraft umgesetzt wird.

12. Prozessbehälter mit einem Ventil (19) gemäß einem der Ansprüche 1 bis 11, wobei das Ventil (19) so angeordnet ist, dass es eine Leitung (16) freigeben oder verschließen kann, durch die ein Material mit körnigen Bestandteilen in den Prozessbehälter (17) gefördert werden kann.

13. Prozessbehälter nach Anspruch 12, **dadurch gekennzeichnet, dass** zwischen Zuständen des Ventils (19) umgeschaltet wird, wenn keine Druckdifferenz über dem Ventilglied (32) anliegt.
